Europäisches Patentamt

European Patent Office

Office européen des brevets

(19)

(11) Veröffentlichungsnummer: **0 085 865**
**B1**

(12) # EUROPÄISCHE PATENTSCHRIFT

(45) Veröffentlichungstag der Patentschrift:
12.03.86

(21) Anmeldenummer: 83100496.5

(22) Anmeldetag: 20.01.83

(51) Int. Cl.⁴: **A 23 L 1/08**

(54) Verfahren zur Herstellung von pulverisierten Honigprodukten und ihre Verwendung.

(30) Priorität: 09.02.82 DE 3204367

(43) Veröffentlichungstag der Anmeldung:
17.08.83 Patentblatt 83/33

(45) Bekanntmachung des Hinweises auf die Patenterteilung:
12.03.86 Patentblatt 86/11

(84) Benannte Vertragsstaaten:
AT CH DE FR GB IT LI

(56) Entgegenhaltungen:
DE - A - 2 141 329
FR - A - 2 463 587
US - A - 2 693 420

FOOD ENGINEERING, Band 45, Nr. 11, November 1973.
Seite 165, F.W. PECK: "Anti-caking agent improves dry mix flow"
CHEMICAL ABSTRACTS, Band 70, Nr. 21, 1969, Seite 229, Nr. 95594d, Columbus, Ohio, USA

(73) Patentinhaber: **Schanze, Rudolf, c/o Hotel Fruth Landsberger Strasse 9, D-8034 Germering (DE)**

(72) Erfinder: **Schanze, Rudolf, c/o Hotel Fruth Landsberger Strasse 9, D-8034 Germering (DE)**

(74) Vertreter: **Kraus, Walter, Dr. et al, Patentanwälte Kraus, Weisert & Partner Thomas-Wimmer-Ring 15, D-8000 München 22 (DE)**

**Beschreibung**

Die Erfindung betrifft ein Verfahren zur Herstellung von pulverisierten Honigprodukten und die Verwendung der pulverisierten Bienenprodukte.

Bienenprodukte, insbesondere Honig, ferner Drohnensaft und Weiselsaft, Propolis, Propolisextrakte (Bienenkittharze), die in Honig aufgelöst sind, ebenso Pollen und Bienenbrot, die ebenfalls in Honig verteilt sind, sind ausserordentlich zähplastische, schwerfliessende viskose Stoffe. Abgesehen von ihrem Nährwert, der je nach der Art der Produkte unterschiedlich jedoch immer sehr hoch ist, besitzen diese Produkte zusätzliche gesundheitsfördernde, krankheitsverhindernde, kurz biologische Eigenschaften. Diese beruhen darauf, dass die Bienenprodukte Stoffe enthalten, die teilweise schon aus der pflanzlichen Nahrung der Bienen stammen, grösstenteils aber durch die Bearbeitung und Verarbeitung durch die Bienen entstehen, die in den Bienenprodukten angereichert vorliegen und diese biologischen Eigenschaften ergeben. (Vgl. beispielsweise Edmund Herold «Heilwerte aus dem Bienenvolk», 6. Auflage, 1970, Ehrenwirth-Verlag, München.

Die vielfältigen und segensreichen Wirkungen dieser Stoffe sind insgesamt bekannt. Jedoch ist die Zusammensetzung der Stoffe noch nicht endgültig aufgeklärt, und einige der Stoffe wurden noch nicht identifiziert. Es steht jedoch fest, dass diese Stoffe äusserst empfindlich sind, insbesondere gegen Erwärmung. Deshalb werden Bienenprodukte im allgemeinen bei Temperaturen im Bereich von —15°C bis +13°C gelagert. Bei Honig wird darauf geachtet, dass jede Kristallisation verhindert wird, da diese Vergärungen begünstigt und zu Verderb führen kann. Die besonderen Wirkungen der Biegenprodukte werden teils hormonalen, enzymatischen und vitaminartigen Wirkstoffgruppen, teils komplexen mineralischen Spurenstoffgruppen zugeschrieben, von denen ebenfalls bekannt ist, dass sie gegen Erwärmungen über einen Bereich von 35 bis 40°C zunehmend empfindlich sein können.

Diese komplexen Wirkstoffgefüge der Bienenprodukte fordern besondere Aufmerksamkeit, insbesondere um sie bei ihrer Verwendung und vorher erfolgenden Bearbeitung für den menschlichen Gebrauch unverändert wirksam zu erhalten. Dabei liegt in der durchgängig plastischen, zähen, wasserhaltigen Konsistenz der Bienenprodukte die besondere technische Schwierigkeit.

Für die menschliche Nahrung und eine darauf abgestimmte Verarbeitung ist es aber notwendig diese Substanzen und Gemenge technisch handhabbar zu machen. Derartige Verarbeitungsmethoden bedienen sich mechanischer und physikalischer Eingriffe, insbesondere des Wasserentzugs, der in der Regel infolge Wärmezufuhr zu mehr oder weniger starker Belastung und Denaturierung führt. Damit werden Bienenprodukte nachteilig beeinflusst und ihrer wesentlichen Besonderheit, der sogenannten «Vitalkraft», beraubt. Der Abbau setzt bei Temperaturen im Bereich von 35 bis 40°C ein und ist umso stärker, je höher die Temperatur ist und je länger die Zeit ist, während der das Produkt bei der erhöhten Temperatur gehalten wird.

Durch die erhöhte Temperatur treten zusätzlich hygienische Probleme auf. Bei erhöhter Temperatur kann leicht eine Wiederbehaftung mit Keimen erfolgen, und die Entwicklung der Keime wird durch die erhöhte Temperatur gefördert. Bei der industriellen Verarbeitung ist ein Erwärmen immer nachteilig ebenfalls wie auch eine längere Behandlungszeit, da dadurch erhöhte Kosten entstehen, und diese aus wirtschaftlichen Gründen möglichst eingeschränkt werden sollen.

Zur Herstellung von festen Honig enthaltenden Stoffen sind verschiedene Verfahren bekannt.

So werden in dem DP (DDR) 7968, den DPB 848 488 und 879 007 sowie der US-PS 2 621 128 Verfahren zur Herstellung von pulverförmigen Honigprodukten beschrieben. Alle diese bekannten Verfahren besitzen den Nachteil, dass das Honigprodukt während längerer Zeiten auf erhöhte Temperaturen erhitzt werden muss. In der DE-OS 2 919 059 wird ein Verfahren zur Herstellung von pulverförmigen Honigprodukten beschrieben, das gegenüber den Verfahren, die in den oben genannten Literaturstellen beschrieben werden, vorteilhaft ist. Bei dem aus der DE-OS 2 919 059 beschriebenen Verfahren wird Honig mit Buttermilchpulver vermischt.

In der DE-OS 2 919 059 wird beschrieben, dass selbst bei geringen Produktmengen für die Einarbeitung des Honigs in geringen Mengen 10 bis 30 min gemischt werden muss. Daraufhin erfolgt eine Ablagerung, die mindestens 10 min beträgt (Beispiel 5), aber in der Regel zwischen 24 bis 48 Stunden (Beispiel 1 u.a.) liegt. Nach der Zwischenlagerung erfolgt der endgültige Zerkleinerungsprozess, der wiederum 15 bis 20 min dauert. Erst dann sind die Produkte herstellungsmässig fertig. Es liegen insgesamt Mischzeiten von 25 bis 50 min und Lagerungszeiten von üblicherweise 1 bis 2 Tagen vor. Dies schliesst eine industrielle Herstellung so gut wie aus, wenn man darunter versteht, dass industrielle Arbeitsgänge hygienisch ohne Risiken und ausserdem vom Raum-, Zeit- und Geräteaufwand her sehr wirtschaftlich arbeiten sollten.

In der DE-OS 1 692 782 wird ein Verfahren zur Herstellung eines Honig-Milch-Trockenerzeugnisses beschrieben, bei dem ein Gemisch aus Honig, einem Trockenmilcherzeugnis und Wasser vermischt und die Mischung getrocknet wird. Anstelle des Trockenmilcherzeugnisses und Wasser kann man auch frische Milchprodukte, beispielsweise Vollmilch, Magermilch, Buttermilch und Molke, verwenden. Bei diesem bekannten Verfahren erhält man ein Produkt, welches pulverförmig ist und 10 bis 75 Teile Honigfeststoffe auf etwa 90 bis 25 Teile Milchfeststoffe enthält. Es ist bei diesem Verfahren wesentlich, dass der Wassergehalt vor dem Trocken bei über 90% liegt. Gemäss den meisten Beispielen erfolgt die Trocknung durch Gefriertrocknung. Es wird jedoch angegeben, dass man auch andere Trocknungsverfahren verwenden kann. Es ist ein Nachteil dieses Verfahrens, dass zur Überführung des Honigs in ein pulverförmiges Produkt grosse Energiemengen erforderlich sind, da Lösungen mit einem Wassergehalt von über 90% eingedampft und getrocknet werden müssen. Dieses Verfahren ist daher technisch nachteilig. Die Gefriertrocknung ist weiterhin apparateaufwendig, und daher ist dieses Verfahren für die technische Grossherstellung von gepulverten Honigprodukten ungeeignet.

In der DE-AS 1 003 560 wird ein Verfahren zur Herstellung von Honigprodukten beschrieben, bei dem eine Lösung von gelatinierter Stärke mit Honig vermischt, die Mischung bis etwa 45°C zum Abbau der Stärke stehengelassen wird und nach der Zugabe von Zitronensäure abgekühlt und im Vakuum konzentriert wird. Gemäss einer speziellen Ausführungsform gibt man zu dem Produkt aus Honig und Stärke Milch oder Milchtrockenpulver. Das bei diesem Verfahren erhaltene Produkt besitzt den Nachteil, dass seine Lagerungsfähigkeit begrenzt ist.

Aus den oben genannten Patentschriften geht weiterhin hervor, dass bei allen Verfahren erhebliche Probleme auftreten. Bei der Zugabe von Honig finden Verbackungen und Verklumpungen statt, und zur Beseitigung der Klumpen ist ein erheblicher Zeit- und Geräteaufwand erforderlich. Es ist ein weiterer Nachteil der bekannten Verfahren, dass die bei den bekannten Verfahren erhaltenen Produkte nur geringe Honigmengen enthalten. So enthält das Produkt, das man gemäss der DE-OS 2 919 059 erhält, zwischen 25 bis maximal 37,5% Honig.

Im Handel ist ein pulverisiertes Honigprodukt, welches aus den USA importiert wird, erhältlich und das durch Gefriertrocknung eines Honig enthaltenden Materials hergestellt wurde. Das im Handel erhältliche Produkt enthält ca. 30% Honig. Durch die Gefriertrocknung bleibt die biologische Aktivität des Honiganteils erhalten. Das Produkt lässt sich jedoch nicht mit einem höheren Honiganteil herstellen. Aufgrund der aufwendigen Herstellung ist das Produkt sehr teuer und steht auch nur in beschränktem Ausmass zur Verfügung.

Der vorliegenden Erfindung liegt die Aufgabe zugrunde, ein pulverförmiges Bienenprodukt zur Verfügung zu stellen, welches mindestens einen Honiganteil von 50 Gew.-% oder mehr, bezogen auf das Endprodukt, enthält. Das pulverförmige Bienenprodukt soll auf einfache Weise in industriellem Massstab herzustellen sein, ohne dass ein zu grosser Zeitaufwand erforderlich ist. Weiterhin sollen die bei dem Verfahren erforderlichen Geräte auf einfache Geräte beschränkt sein, und die Standardisierung des erhaltenen Produkts soll schnell und sicher sein. Der technische Ablauf des erfindungsgemässen Verfahrens soll so erfolgen, dass die biologische Aktivität des Honigs bzw. der Bienenprodukte unbeeinträchtigt erhalten bleibt.

Gegenstand der Erfindung ist somit ein Verfahren zur Herstellung von pulverisierten Honigprodukten, die mindestens 50 Gew.-% Honig enthalten, das dadurch gekennzeichnet ist, dass man 15 bis 25 Gew.-% pyrogene oder präzipitierte feinteilige Kieselsäure, bezogen auf das Endprodukt, in einen Mischer gibt, die Kieselsäure bewegt und zu der sich bewegenden Kieselsäure 85 bis 75 Gew.-% Honig oder eine Mischung aus Honig und einem oder mehreren anderen Bienenprodukten, bezogen auf das Endprodukt, kontinuierlich oder portionsweise auf solche Weise zugibt, dass eine Temperatur von 35°C nicht überschritten wird.

Die Erfindung betrifft weiterhin ein Verfahren zur Herstellung von pulverisierten Honigprodukten, die mindestens 50 Gew.-% Honig enthalten, welches dadurch gekennzeichnet ist, dass man 5 bis 15 Gew.-% pyrogene oder präzipitierte feinteilige Kieselsäure und 25 bis 35 Gew.-% Kohlehydrate, die als Ballaststoffe wirken oder selbst Nährmittelqualität aufweisen, in einem Mischer vermischt und zu dem sich bewegenden Gemisch aus Kieselsäure und Kohlehydraten 50 bis 70 Gew.-% Honig oder eine Mischung aus Honig und einem oder mehreren anderen Bienenprodukten, wobei die Gewichtsprozente auf das Endprodukt bezogen sind, kontinuierlich oder portionsweise auf solche Weise zugibt, dass eine Temperatur von 35°C nicht überschritten wird.

Ebenfalls betrifft die Erfindung ein Verfahren zur Herstellung von pulverisierten Honigprodukten, die mindestens 50 Gew.-% Honig enthalten, das dadurch gekennzeichnet ist, dass man 5 bis 15 Gew.-% pyrogene oder präzipitierte feinteilige Kieselsäure und 25 bis 35 Gew.-% Kohlehydrate, die als Ballaststoffe wirken oder selbst Nährmittelqualität aufweisen, und 50 bis 70 Gew.-% Honig oder eine Mischung aus Honig und einem oder mehreren anderen Bienenprodukten, wobei die Gewichtsprozente auf das Endprodukt bezogen sind, miteinander vermischt, indem man

a) aus den Kohlehydraten und dem Honig oder der Mischung aus Honig und einem oder mehreren anderen Bienenprodukten ein Gemisch herstellt, welches 45 bis 55 Gew.-% Honig oder eine Mischung aus Honig und einem oder mehreren anderen Bienenprodukten und 55 bis 45 Gew.-% Kohlehydrate, bezogen auf das Gemisch aus Honig und Kohlehydraten, enthält,

b) zu dem Gemisch aus Kohlehydraten und Honig die Kieselsäure zugibt, vermischt und

c) zu dem sich bewegenden Gemisch aus Honig, Kohlehydraten und Kieselsäure den restlichen Honig oder die restliche Mischung aus Honig und einem oder mehreren Bienenprodukten kontinuierlich oder portionsweise auf solche Weise zugibt, dass eine Temperatur von 35°C nicht überschritten wird.

In der folgenden Beschreibung soll der Begriff «Honig» auch ein Gemisch aus Honig und einem oder mehreren Bienenprodukten mitumfassen.

Die Erfindung betrifft weiterhin die Verwendung des erhaltenen Produktes pulverisierten Bienenprodukts als Vorprodukt für die Nahrungsmittelherstellung, als Trägerstoff für Arzneimittel oder als Nahrungsmittel oder als Futtermittel.

Das Verfahren geht davon aus, dass dem Honig ein geeigneter Trägerstoff zur Pulverisierung vorgelegt wird. Hierzu wird feinpulverige Kieselsäure verwendet. Solche Kieselsäure ist z.B. unter dem Warenzeichen Aerosil im Handel und kann von der Degussa bezogen werden.

Von derartiger pyrogener oder präzipitierter Kieselsäure wird beschrieben, dass sie geeignet ist, Äthoxyquin, Cholinchlorid, Vitamin E als Alpha-Tocopherol-Acetat, Melasse und Lecithin aus dem flüssigen Zustand in Pulverform durch Absorption der Feuchte oder des Öls zu überführen. Bei Äthoxyquin werden bis 66%, bei Tocopherol-Acetat bis 65%, bei Lecithin und Melasse bis 75% Anteile, jeweiliger Rest von 25 bis 35% derartiger Kieselsäure, erreicht. Es wird bemerkt, dass man in der Praxis beispielsweise

bei Tocopherol-Acetat jedoch nur 50% realisiert; also weit unter den laborativ angegebenen Höchstmengen verbleibt. (Vgl. beispielsweise Degussa, Frankfurt, Schriftenreihe Pigmente, Nr. 11 «Grundlagen» 1967, Nr. 23 «Aerosil als Verdickungsmittel in Flüssigkeiten», Nr. 30 «Synth. Kieselsäuren, ein moderner Hilfsstoff in der Futtermittel-Industrie», Nr. 50 «Synth. Kieselsäure als Hilfsstoff in der Futtermittelindustrie».)

Die analog mit Honig durchgeführten Versuche bestätigen diese Ergebnisse, auch wenn Honig durch Erwärmung bis auf 40°C sehr dünnflüssig gemacht wurde. Im Bereich von 50 bis 75% Honiganteil stellen sich spontane Verklumpungen ein, die nicht mehr auflösbar sind.

Überraschenderweise wurde gefunden, dass man jedoch den Anteil an Honig in dem pulverförmigen Honigprodukt wesentlich erhöhen kann, wenn man die Kieselsäure vorgibt und dann unter Bewegen zu der Kieselsäure den Honig zugibt, ohne eintretende Verklumpungen zu beachten.

Gibt man den Honig, der andere Bienenprodukte enthält, zu der vorgelegten Kieselsäure, so kann man überraschenderweise pulverförmige Produkte herstellen, die ohne Schwierigkeiten 75 Gew.-%, bei entsprechender Durchführung des Verfahrens 80 Gew.-% und sogar 85 Gew.-%, Honiganteil enthalten. Dies bedeutet, dass überraschenderweise zur Herstellung von pulverförmigen Honigprodukten bereits 25 bis 15 Gew.-%, bezogen auf das Endprodukt, an vorgelegter Kieselsäure ausreichen.

Die Herstellung der bisher bekannten pulverisierten Flüssigkeiten, wie Äthoxyquin, Tocopherol-Acetat, Melasse usw. erfolgt in Mischanlagen, wie sie üblicherweise für trockne Mischungen erfolgt, gegebenenfalls mit Sondereinrichtungen für den Zusatz geringer Mengen Flüssigkeiten. Von vornherein muss hier der Prozess so geführt werden, dass Verklumpungen und Verbackungen vermieden werden, da sie nicht mehr aufgelöst werden können.

Erfindungsgemäss greift man jedoch auf Mischertypen zurück, die üblicherweise für die Emulsion von Stoffen oder die Dispergierung von Flüssigkeiten verwendet werden. Das heisst, dass üblicherweise die Endprodukte diese Mischer in flüssiger bis mehr oder weniger dickflüssiger Form verlassen, also aus dem Gerät ausfliessen.

Derartige Geräte eignen sich jedoch besonders gut für das erfindungsgemässe Verfahren, also nicht flüssige Stoffe untereinander oder feste in flüssigen zu vermengen, sondern umgekehrt, die vorgelegte trockne Kieselsäure mit dem dick-flüssigen Honig zu vermengen, damit abschliessend ein festes und rieselfähiges Pulver das Mischgerät als Endprodukt verlässt.

Die Geräte besitzen allerdings einen Nachteil, der darin besteht, dass der Mischwiderstand im üblichen Gebrauch gering ist und die motorische Kraft entsprechend schwach ist. Für die Versuche in einzelnen Chargen reicht die kurzzeitige Überlastbarkeit der Motoren aus, um den Mischvorgang zu realisieren. Danach kann der überlastete und überhitzte Motor wieder auskühlen. Für den speziellen Betrieb ist jedoch vorzusehen, dass die motorische Leistung auf den andersgearteten und neuen Arbeitsgang abgestimmt wird; es ist daher eine stärkere Motorleistung vorzusehen.

Ein weiterer Gerätetyp wurde erprobt und für gut geeignet befunden. Für die Zerkleinerung von Feststoffen werden Mühlen benutzt, unter denen Hammermühlen eine z.B. im Futtermittelbereich relativ beherrschende Stellung einnehmen. Derartige Mühlen bestehen im arbeitenden Teil aus einer Welle, auf der bewegliche Schläger, die Hämmer, sitzen. Durch Motorkraft werden diese Schläger im Kreis bewegt, so dass sie durch die Tangentialkraft sich radial strecken, das zulaufende Material aufnehmen und in schnelle Bewegung setzen. Das derart schnell bewegte und durch den Mühlenraum in kreisende Bewegung versetzte Material wird gegen entgegenstehende Flächen, Prallflächen, geschleudert, wodurch es sich zerkleinert. Je nach dem im Auslauf angebrachten Sieb verlässt das genügend zerkleinerte Material den Mahlraum mit Schlägern und Prallflächen. Das übrige Material verbleibt in der Vermahlung, bis es ebenfalls über das Sieb austreten kann. Es tritt eine hohe Scher- und Zerkleinerungskraft ein.

Überraschenderweise kann auch ein derartiges Gerät verwendet werden. Die vorzulegende Kieselsäure oder Kohlenhydrate oder Gemische aus Kieselsäure oder Kohlenhydrate werden über den Einlauftrichter der Mühle zugeführt, obwohl sie bereits fein genug sind. Zugleich wird jedoch auch der Honig oder die Honigmischung durch Leitungen eingeführt. Die Mühle löst die entstehenden Agglomerate und Klumpen auf, das anfänglich noch nicht richtig proportionierte, honigarme Material wird am Auslauf abgefangen und durch an sich bekannte Fördereinrichtungen, Schnecken, Bänder und ähnliches, wieder in den Trichter zurückgeführt, wo sich der Prozess wiederholt, bis die benötigte Menge Honig/Honigmischung mit dem Träger vermengt ist. Durch Einlauf und Rückführung kann die Temperatur sehr gut beeinflusst und im gewünschten Bereich gehalten werden.

Auch hier erweist sich die unorthodoxe Handhabung des Geräts verfahrenstechnisch als wesentlicher Vorteil. Über das Sieb und die Umdrehungszahl kann die Pulverisierung entsprechend gesteuert werden.

Je nachdem wie dickflüssig der entsprechende Honig zugeführt wird, entstehen beim Zuführen des Honigs sofort Verklumpungen und Verbackungen. Diese sind unerheblich. Die Mengenproportionen im oben angegebenen Bereich werden vorbestimmt. Der Honig wird portionsweise in den mit Kieselsäure vorgelegten arbeitenden Mischer eingeführt. Die durch die Verklumpung anwachsenden Bewegungswiderstände führen zu erhöhter Reibung und einer geringfügigen Wärmeentwicklung. Diese reicht aus, bis zum Abschluss der Mischung in zunehmendem Masse die entstandenen Klumpen und Verbackungen aufzulösen. Zweckmässig wird der Honig im Bereich von 20 bis 25°C eingeführt. Im Verlauf des Vermischens erhöht sich die Temperatur geringfügig auf einen Wert im Bereich von 32 bis 35°C. Bei der portionsweisen Zugabe der Honigpartien stehen in der Anfangsphase deutlich abgetrennte Honigklumpen in der Kieselsäure. Die Klumpenbildung kann sich während der Zugabe des ersten Drittels des Honigs verstärken. Bei der weiteren Honigzugabe erhält man jedoch dann eine homogene Mischung, und schliesslich entsteht ein trockenes Pulver.

Bei einer Ausführungsform des erfindungsgemässen Verfahrens wird die Kieselsäure vorgelegt, und zwar je nach den gewünschten Anteilen im Endprodukt in Mengen von 15 bis 25 Anteilen, und dann gibt man den Honig oder das Honigprodukt portionsweise zu. Die Zugabe kann auch kontinuierlich erfolgen. Bei der Zugabe achtet man nicht im geringsten auf die anfänglich entstehende Klumpenbildung. Die Zugabe erfolgt lediglich so, dass entweder der Honig möglichst in die Mitte des Materials eingeführt wird oder dass, wenn der Honig auf beliebige Weise eingeführt wird, Abstreifer an den Wandungen des Behälters angebracht sind, die den Honig wieder in das Material zurückführen. Diese Art der Verfahrensdurchführung ist bevorzugt. Es ist bei dem erfindungsgemässen Verfahren nicht erforderlich, erwärmten Honig oder erwärmte Honigprodukte in die Kieselsäure einzuführen. Entscheidend ist, dass ein Mischvorgang am Rührgerät mit hoher Scherkraft erfolgt, so dass sich die Widerstand leistenden Konglomerate durch ihre eigene Reibungswärme auflösen können. Dazu muss eine kurzzeitige Überlastung des Motors entweder in Kauf genommen werden, oder aber es muss eine Änderung der Motorleistung des Rührgeräts erfolgen.

Gemäss einer weiteren erfindungsgemässen Ausführungsform wird die Kieselsäure mit den Kohlenhydraten vermischt, und dann gibt man zu diesem Gemisch, wie oben beschrieben, den Honig hinzu. Man kann weiterhin die Kieselsäure und die Kohlenhydrate getrennt in einem Vormischer vermischen und dann das Gemisch, wie oben beschrieben, mit dem Honig vermischen. Gemäss einer weiteren Ausführungsform stellt man zuerst ein Gemisch aus Honig und Kohlenhydraten her, indem man die Kohlenhydrate und den Honig auf solche Weise miteinander vermischt, dass man noch ein pulverförmiges Gemisch erhält. Pulverförmige Gemische erhält man, wenn der Honiganteil maximal 55 Gew.-% beträgt, bezogen auf das Gemisch aus Honig und Kohlenhydraten. Zu dem Gemisch aus Honig und Kohlenhydraten gibt man dann die Kieselsäure, vermischt und fügt dann den Rest des Honigs hinzu.

Es ist ein weiterer Vorteil des erfindungsgemässen Verfahrens, dass der Mischvorgang in erstaunlich kurzer Zeit abgeschlossen ist. Im allgemeinen erfordert das Mischen eine Zeit von nur wenigen Minuten bis höchstens einer Viertelstunde.

Das bei dem erfindungsgemässen Verfahren erhaltene Material besitzt eine Temperatur im Bereich von 25 bis 32 °C und kann sofort abgepackt werden oder seiner Endverwendung zugeführt werden. Es ist nicht erforderlich, das Material nachträglich zu zerkleinern oder eine Zwischenlagerung durchzuführen. Es treten beim Lagern auch keine Volumenänderungen auf.

Die erzielte Partikelgrösse, die von feinmehlig bis grobmehlig, schrotig reichen kann, wird durch die Viskosität des einlaufenden Honigs bestimmt. Die Viskosität des Honigs kann entweder über die Temperatur oder über die Reibkraft beim Mischen beeinflusst werden. Eine höhere Temperatur oder eine intensivere Vermischung führt zu feineren Endpartikeln. Verwendet man Honig mit einer Temperatur von 15 bis 25 °C, so erhält man mit ansteigender Temperatur feineres Material.

Im Bereich von 400 bis 5000 U/min und etwas längerer Mischdauer erhält man ebenfalls feines Material. Die Grösse der Teilchen des Endprodukts kann somit auf einfache Weise eingestellt werden, und zwischen Mehl und Feingranulat kann man jede geeignete Teilchengrösse erzielen.

Bevorzugt verwendet man bei dem erfindungsgemässen Verfahren Honig mit hohen Glucoseanteilen, der normalerweise gern kristallisiert. Dies ist für den Verkauf von Honig wegen seiner Festigkeit und Entmischungstendenz absolut unerwünscht. Verwendet man bei dem erfindungsgemässen Verfahren jedoch Honig mit hohem Glucoseanteil, so wird die Pulverisierung erleichtert. Nach allgemeiner Ansicht sind Honigsorten mit starker Kristallisation für den Verkauf ungeeignet bis bedenklich. (Vgl. beispielsweise Enoch Zander, Anna Maurizio «Der Honig», 2. Auflage, 1974, Verlag Eugen Ulmer, Stuttgart und Roy A. Grout, «The Hive and the Honey Bee», 5. Auflage, 1963, Standard Printing Comp., Dadant & Sons, Hamilton, Illinois USA). Für das erfindungsgemässe Verfahren ist ein solcher zum Verkauf ungeeigneter Honig jedoch besonders geeignet. Der Glucoseanteil des Honigs liegt in solchen Produkten im Bereich von 40%, bevorzugt über 50% und mehr bevorzugt noch höher.

Der bei dem erfindungsgemässen Verfahren verwendete Honig oder glucosereicher Honig kann zusätzlich noch andere Bienenprodukte enthalten. Honig, einschliesslich des glucosereichen Honigs, kann beispielsweise Bienenbrot und/oder Blütenpollen, Weisellarrvensaft (Gelee royale), Drohnenlarvensaft, dispergiertes Bienenwachs, Propolisextrakt und/oder Propolis enthalten. Der Honig enthält jedoch insgesamt nicht mehr als 50 Gew.-% anderes Bienenprodukt, vorzugswesie 40 Gew.-%, besonders bevorzugt 15 Gew.-% anderes Bienenprodukt oder Gemisch aus Bienenprodukten, bezogen auf den Honig. Die Anteile der verschiedenen Bienenprodukte können wie folgt sein:

Bienenbrot und/oder Blütenpollen bis zu 50 Gew.-%, vorzugsweise 20 bis 30 Gew.-%,

Weisellarvensaft (Gelee royale) und/oder Drohnenlarvensaft bis zu 15 Gew.-%, vorzugsweise 5 bis 10 Gew.-%,

dispergiertes Bienenwachs und/oder Propolisextrakt bis zu 10 Gew.-%, vorzugsweise 2 bis 8 Gew.-% und

Propolis (Bienenkittharz) bis zu 2 Gew.-%, vorzugsweise 1 Gew.-%. Gemäss einer weiteren erfindungsgemässen Ausführungsform werden dem Produkt aus Honig und Kieselsäure Kohlehydrate, die als Ballaststoffe wirken oder selbst Nährmittelqualität aufweisen, beigemischt.

Vorzugsweise verwendet man Cellulosen. Von den Cellulosen ist die Alpha-Cellulose besonders bevorzugt, da sie industriell verfügbar ist. Bevorzugte Kohlehydrate sind extrudierte oder expandierte Getreideprodukte oder mikronisierte Getreideprodukte, die im Handel erhältlich sind, beispielsweise Quellmehle, extrudierte Stärkevorprodukte für die Lebensmittelindustrie, z.B. solche aus Weizen, Mais, Reis, Hirse und Maltodextrine. Derartige Kohlehydrate, die als Ballaststoffe wirken oder selbst Nährmittelqualität aufweisen, sind dem Fachmann geläufig.

Bei dem erfindungsgemässen Verfahren erhält man so Endprodukte, die Honig und Kieselsäure bzw. Honig, Kieselsäure und polymere Kohlehydrate enthalten.

Die Produkte aus Kieselsäure und Honig enthalten

75 bis 85 Gew.-%, vorzugsweise 80 Gew.-%, Honig
25 bis 15 Gew.-%, vorzugsweise 20 Gew.-%, Kieselsäure, bezogen auf das Endprodukt.

Die Produkte aus Honig, Kieselsäure und Kohlehydraten enthalten.

5 bis 15 Gew.-%, vorzugsweise 5 bis 10 Gew.-%, Kieselsäure,
25 bis 35 Gew.-%, vorzugsweise 20 bis 30 Gew.-%, Kohlehydrate und
50 bis 70 Gew.-%, vorzugsweise 60 bis 70 Gew.-%, Honig.

Besonders bevorzugte erfindungsgemäss hergestellte Produkte enthalten 20 Gew.-% Kieselsäure und 80 Gew.-% Honig.

Ein weiteres bevorzugtes erfindungsgemässes Produkt enthält 66 Gew.-% Honig, 28 Gew.-% Kohlehydrate und 6 Gew.-% Kieselsäure. Die Prozentgehalte sind jeweils auf das Endprodukt bezogen.

Das Endprodukt kann zusätzlich zu den angegebenen Bestandteilen noch weitere Zusatzprodukte enthalten. Die Zusatzprodukte werden in Mengen von maximal 5 Gew.-% eingesetzt. Das heisst auf 95 Gew.-% Endprodukt, das man oben erhalten hatte, gibt man maximal 5 Gew.-% Zusatzstoffe. Als Zusatzstoffe kann man solche Stoffe verwenden, die wirkstoffergänzend wirken können, beispielsweise Enzyme, Hormone, Vitamine, Mineralstoffe (Ca - K - Na - Mg - P - S) und Spurenelemente jeder Form, Farbstoffe, Aromastoffe und andere Stoffe mit besonderer Wirkung, beispielsweise Pflanzenextrakte.

Die Zusatzstoffe kann man je nach Beliebigen der Kieselsäure, dem Gemisch aus Kieselsäure und Kohlehydraten, dem Honig, dem Gemisch aus Honig und Cellulose oder der Cellulose beimischen, oder man kann die Zusatzstoffe auch dem erhaltenen Endprodukt zugeben.

Es war überraschend und hat nicht nahegelegen, dass man pulverförmige Honigprodukte mit einem so geringen Gehalt an Kieselsäure herstellen kann. Es war weiterhin überraschend, dass man Kieselsäure, polymere Kohlehydrate und Honig zu einem pulverförmigen Gemisch verarbeiten kann, da Honig im Gemenge mit Alpha-Cellulose allein normalerweise sofort zur zähklebrigen starken Klumpenbildung führt.

Erfindungsgemäss ist es möglich, einen Teil der Kieselsäure durch Ballaststoffe organischer Herkunft, d.h. polymere Kohlehydrate, Alpha-Cellulose oder ähnliche Stoffe, zu ersetzen.

Der besondere und überraschende Effekt ist, dass damit der Anteil organischer Materie in der Mischung auf 90 bis 95% gesteigert werden kann und der Anteil der anorganischen Kieselsäure drastisch bis auf 10 bis 5% vermindert werden kann, ohne dass die Zielsetzung ein handhabbares, fliessfähiges pulverisiertes Produkt zu erhalten, verfehlt wird.

Das verfahrensgemäss ausgeführte pulverisierte Honigprodukt weist zusammenfassend folgende Verbesserungen auf:

Gegenüber den bisher bekannten Mischverfahren (Degussa), die von Proportionen von 50 bis 75% fliessendem Produkt zu 50 bis 25% Kieselsäure ausgehen, wird die Proportion von 75 bis 85% fliessendem Bienenprodukt als Honig oder Honigmischung zu 25 bis 15% Kieselsäure erreicht. Der zur Pulverisierung benötigte Kieselsäureanteil kann daher drastisch um den Faktorbereich 0,6 bis 0,5 verringert werden, faktisch halbiert er sich, was eine enorme Verringerung bedeutet, weil damit der technisch eingebrachte Anteil an Mineral oder Asche so verkürzt wird, dass er für die praktische Anwendung nicht mehr hinderlich ist.

Führt man verfahrensgemäss andere geeignete organische Materialien ein, wie Kohlenhydrate, polymere Zucker oder Cellulosen, so führt dies zu einer weiteren drastischen Absenkung der Kieselsäureanteile in den Bereich von 15 bis 5% vom Endprodukt. Dieser Faktorbereich liegt gegenüber dem Modell (Degussa) bei 0,3 bis 0,1, d.h. dass nur noch 1/3 bis 1/10 der bisher zu verwendenden Kieselsäure benötigt wird. Damit reduziert sich der Anteil an Mineral oder Asche im Endprodukt so stark, dass er im Bereich der Aschegehalte von tierischen oder pflanzlichen Produkten liegt, beispielsweise von Molkenpulver (tierisch) oder Getreide.

Das erfindungsgemässe Verfahren besitzt weitere wesentliche Vorteile:

1. Es ist möglich, pulverförmige Honigprodukte mit einem Honiganteil von über 50%, bevorzugt zwischen 75 bis 85%, im Endprodukt herzustellen.
2. Die Herstellung der Produkte erfolgt schnell, sicher, mit geringem Zeit- und Geräteaufwand.
3. Bei dem erfindungsgemässen Verfahren treten maximal Temperaturen von 35°C auf, dadurch werden die Vitalstoffe des Honigs nicht angetastet, d.h. sie bleiben erhalten.
4. Bei dem erfindungsgemässen Verfahren besteht keine Gefahr, dass die Endprodukte durch Keime kontaminiert werden.
5. Die erhaltenen Endprodukte besitzen infolge des Anteils an Kieselsäure eine deutlich helle Farbe, die praktisch der von Kristallzucker gleichkommt. Infolge der stark süssenden Eigenschaft des Fructoseanteils im Honig entspricht die Süssung ebenfalls in etwa derjenigen von Zucker. Enthält das Endprodukt Honig mit Anteilen von ca. 5% Blütenpollen, so wird es dadurch so gelb gefärbt, dass der Farbton praktisch demjenigen von Honig entspricht. Die Endprodukte können so auch optisch — je nach Bedarf — zuckerähnlich oder honigähnlich ausgestattet sein.

Infolge ihrer pulverisierten Form sind die erfindungsgemässen Produkte im Haushalt und in der verarbeitenden Industrie ausserordentlich bequem zu handhaben und aufzubewahren. Sie eröffnen damit Bienenprodukten, insbesondere Honig, eine breite und neue Palette von Anwendungen und Gebrauchsmöglichkeiten.

Die pulverisierten Produkte können als leicht transportable, dosierbare und mischfähige Halbfabrikate in Lebensmitteln aller Art verwendet werden. Sie können als Anteile in Backmassen, Fertiggerichten, Trockennahrung usw., als Mittel zur Anreicherung von Desserts, Füllmassen, Cremes, Eiskreme, Pasten und Fruchtzubereitungen, als Trägerstoffe für Vitamine, Medikamente, Gewürze, Mineralstoffe usw., als Grundlagen für Tabletten, Pellets, Dragees usw. eingesetzt werden.

Honig lässt sich in der Lebensmittelindustrie, beispielsweise in Desserts, Füllmassen, Cremes usw., nur schwer verarbeiten, da Honig schwer ist und sich sofort absetzt. Er muss daher durch intensives Vermischen und Verrühren möglichst in erwärmtem Zustand feinverteilt werden. Starkes Rühren schadet oft den Lebensmitteln, in die Honig eingearbeitet werden soll, wie beispielsweise Joghurts, Puddings usw., da dadurch deren Struktur zerbricht. Mit dem erfindungsgemässen pulverisierten Produkt treten solche Schwierigkeiten nicht mehr auf.

Es ist beispielsweise weiterhin möglich, auf der Grundlage der pulverisierten Endprodukte unter Zumengen von Milcheiweiss und Fettkonzentraten und Vitaminen und Mineralstoffen wohlschmeckende trockene Rationen für Sport, Hochleistungssport, beispielsweise in Form von Riegeln für Wanderer, Volkswanderer, Langläufer oder in Form von Beutelgetränken für Radfahrer usw., für Krankendiäten usw. herzustellen.

Das erfindungsgemässe Produkt kann ebenfalls als Zuckerersatz anstelle von Zucker verwendet werden.

Die folgenden Beispiele erläutern die Erfindung.

*Beispiel 1a*

*Herstellung eines pulverförmigen Bienenprodukts mit einem Honiganteil von 75 Gew.-%.*

25 kg Kieselsäure werden abgewogen und im Mischer vorgelegt.

75 kg Honig mit einer Temperatur von 23 bis 25°C werden in einen Mischer, in dem sich die Kieselsäure befindet und der in Betrieb ist, über eine Pumpe eingegeben, so dass jeweils 1/6 der Menge (12,5 kg) zuläuft. Es wird dann kurz gewartet, bis sich die Klumpen aufgelöst haben, und dann erfolgt die weitere Honigzugabe.

Nachdem man ca. 3 bis 5 min gemischt hat, besitzt das Mischgut eine ausreichende Homogenität. Die Temperatur des Mischgutes beträgt etwa 30 bis 32°C. Das Mischgut wird sofort entnommen und in Einzelpackungen abgepackt und ist für den Verkauf an den Endverbraucher fertig. Die Zusammensetzung des erhaltenen Produktes ist in der nachfolgenden Tabelle I angegeben.

*Beispiel 1b*

Man arbeitet wie in Beispiel 1a beschrieben, verwendet jedoch anstelle von reinem Honig eine Honigmischung, d.h. Honig, der 6% Weisellarvensaft (Gelee royale) und Drohnenlarvensaft enthält.

Man erhält auf gleiche Weise, wie in Beispiel 1 beschrieben, ein pulverförmiges Produkt, welches abgepackt und dem Endverbraucher zugeführt wird.

*Beispiel 2*

*Herstellung eines pulverförmigen Produkts, welches 60 Gew.-% Honig und 30 Gew.-% Ballaststoffe enthält.*

30 kg Ballaststoffe, im vorliegenden Fall Alpha-Cellulose, werden in ein Mischgerät gegeben.

Zu der Alpha-Cellulose, die im Mischer bewegt wird, gibt man 60 kg Honig portionsweise. Die Zugabe erfolgt so, dass insgesamt 30 bis 40 kg des Honigs zu den Ballaststoffen zugegeben werden. Es entsteht unter Auflösung der Klumpen eine grobkörnige Masse.

Zu dem Gemisch aus Alpha-Cellulose und Honig gibt man 10 kg Kieselsäure, man erhält eine freifliessende pulverige Mischung.

Der Rest des Honigs von 20 bis 30 kg wird in den sich bewegenden Mischer eingepumpt. Unter restlicher Auflösung von Klumpen erhält man eine feinkörnige Masse. Die Temperatur der Masse ist leicht angestiegen, sie liegt jedoch unter 35°C. Das Produkt wird entnommen und abgepackt.

Anstelle eines Mischers kann man bei dem obigen Beispiel auch einen Mühlentrichter verwenden. Setzt man einen Mühlentrichter ein, so wird die Alpha-Cellulose in dem Mühlentrichter vorgelegt und der Honig in die mit Rückführung der Vorlage umtreibende Mühle gegeben.

Die Zusammensetzung des erhaltenen Produktes ist in der nachfolgenden Tabelle I angegeben.

TABELLE I

Zusammensetzung der bei den Beispielen 1 und 2 erhaltenen Endprodukte.

| Beispiel | %-Kieselsäure (Asche) | %-Kohlehydrate (Ballast) | %-Honig (-mischung) |
|---|---|---|---|
| 1 | 25 | — | 75 |
| 2 | 10 | 30 | 60 |

*Beispiel 3*

*Herstellung eines Endprodukts, welches 63 Gew.-% Honig, 22 Gew.-% Glucose und 15 Gew.-% Kieselsäure enthält.*

63 kg Honig werden auf 25°C erwärmt und dann werden unter Rühren 22 kg kristallisierte Glucose eingearbeitet. Die Glucose verbleibt kristallin und wird gleichmässig in den Honig dispergiert.

Ein Mischer, vorzugsweise ein Emulsionsmischer, wird mit 15 kg Kieselsäure als Vorlage beschickt und dann wird der Mischer angestellt.

Die Honig-Glucosemischung wird über eine Pumpe in 6 Portionen von je ca. 6,3 kg in den mit der Vorlage in Bewegung befindlichen Mischer gepumpt. Nach Auflösung der anfänglich entstehenden Konglomerate entsteht eine feinkörnige, trockene Masse, die Temperatur liegt am Ende des etwa 5minutigen Mischvorgangs bei 30 bis 35°C. Die Masse wird entnommen und abgepackt und dem Endverbraucher zugeführt.

Das Endprodukt enthält 13% Wasser.

*Beispiel 4*

*Es wird ein pulveriges Endprodukt mit 64 kg Pollenhonig, 30 kg Ballastkohlehydrat in Form von Cellulose hergestellt.*

48 kg Honig werden auf 23 °C erwärmt, 16 kg Blütenpollen werden im Honig fein dispergiert.

Eine Hammermühle wird im Einlauftrichter mit 15 kg Kieselsäure beschickt. Es wird ein grobes Sieb eingelegt, ein geringer Materialzulauf eingestellt und dann wird die Hammermühle in Gang gesetzt. Dabei wird das austretende Material wieder in den Trichter zurückgeführt.

Die Mischung aus Honig und Pollen wird durch eine Leitung in den Mahlraum und den dort umlaufenden Materialstrom eingepumpt, bis alles Material verbraucht und die Mischung fertiggestellt ist. Über die kontinuierliche Materialrückführung wird die Temperatur unter 35 °C gehalten, indem die Rückführung gleichzeitig zur Abkühlung genutzt wird.

Das fertig hergestellte Produkt wird nach Beendigung zur Abpackung am Austritt entnommen. Dauer der Herstellung zwischen 5 bis 8 Minuten.

Das Endprodukt enthält 14 % Wasser.

**Patentansprüche**

1. Verfahren zur Herstellung von pulverisierten Honigprodukten, die mindestens 50 Gew.-% Honig enthalten, dadurch gekennzeichnet, dass man 15 bis 25 Gew.-% pyrogene oder präzipitierte feinteilige Kieselsäure, bezogen auf das Endprodukt, in einen Mischer gibt, die Kieselsäure bewegt und zu der sich bewegenden Kieselsäure 85 bis 75 Gew.-% Honig oder eine Mischung aus Honig und einem oder mehreren anderen Bienenprodukten, bezogen auf das Endprodukt, kontinuierlich oder portionsweise auf solche Weise zugibt, dass eine Temperatur von 35 °C nicht überschritten wird.

2. Verfahren zur Herstellung von pulverisierten Honigprodukten, die mindestens 50 Gew.-% Honig enthalten, dadurch gekennzeichnet, dass man

5 bis 15 Gew.-% pyrogene oder präzipitierte feinteilige Kieselsäure und

25 bis 35 Gew.-% Kohlehydrate, die als Ballaststoffe wirken oder selbst Nährmittelqualität aufweisen, in einem Mischer vermischt und zu dem sich bewegenden Gemisch aus Kieselsäure und Kohlenhydraten

50 bis 70 Gew.-% Honig oder eine Mischung aus Honig und einem oder mehreren anderen Bienenprodukten, wobei die Gewichtsprozente auf das Endprodukt bezogen sind, kontinuierlich oder portionsweise auf solche Weise zugibt, dass eine Temperatur von 35 °C nicht überschritten wird.

3. Verfahren zur Herstellung von pulverisierten Honigprodukten, die mindestens 50 Gew.-% Honig enthalten, dadurch gekennzeichnet, dass man

5 bis 15 Gew.-% pyrogene oder präzipitierte feinteilige Kieselsäure und

25 bis 35 Gew.-% Kohlehydrate, die als Ballaststoffe wirken oder selbst Nährmittelqualität aufweisen, und

50 bis 70 Gew.-% Honig oder eine Mischung aus Honig und einem oder mehreren anderen Bienenprodukten, wobei die Gewichtsprozente auf das Endprodukt bezogen sind,

miteinander vermischt, indem man

a) aus den Kohlehydraten und dem Honig oder der Mischung aus Honig und einem oder mehreren anderen Bienenprodukten ein Gemisch herstellt, welches

45 bis 35 Gew.-% Honig oder eine Mischung aus Honig und einem oder mehreren anderen Bienenprodukten und

55 bis 45 Gew.-% Kohlehydrate, bezogen auf das Gemisch aus Honig und polymeren Kohlehydraten, enthält

b) zu dem Gemisch aus Kohlehydraten und Honig die Kieselsäure zugibt, vermischt und

c) zu dem sich bewegenden Gemisch aus Honig, Kohlehydraten und Kieselsäure den restlichen Honig oder die restliche Mischung aus Honig und einem oder mehreren Bienenprodukten kontinuierlich oder portionsweise auf solche Weise zugibt, dass eine Temperatur von 35 °C nicht überschritten wird.

4. Verfahren nach Anspruch 2 oder 3, dadurch gekennzeichnet, dass man als Kohlehydrate, die als Ballaststoffe wirken oder selbst Nährmittelqualität aufweisen, Alpha-Cellulose und/oder behandelte, extrudierte, gepuffte Stärkeprodukte verwendet.

5. Verfahren nach einem der vorhergehenden Ansprüche, dadurch gekennzeichnet, dass für die Vermischung der Bestandteile Mischgeräte verwendet werden, die zu Herstellung von Emulsionen oder Dispersionen als Flüssigkeitsmischer normalerweise eingesetzt werden, bei denen die Motorleistung verstärkt ausgelegt ist.

6. Verfahren nach einem der vorhergehenden Ansprüche, dadurch gekennzeichnet, dass man als Honig glucosereichen Honig mit über 40, vorzugsweise 50 Gew.-% Anteil Glucose verwendet.

7. Verfahren nach einem der vorhergehenden Ansprüche, dadurch gekennzeichnet, dass man als andere Bieneprodukte Drohnensaft, Weiselsaft, Propolis, Propolisextrakte, Pollen, Bienenbrot und/oder ihre Gemische verwendet.

8. Verfahren nach einem der Ansprüche 1, 2, 3, 4, 5 oder 6, dadurch gekennzeichnet, dass man als Gemisch aus Honig und Bienenprodukt, Honig, der bezogen auf das Honigfrischgewicht

bis zu 50 Gew.-% Bienenbrot und/oder Blütenpollen und/oder

bis zu 15 Gew.-% Weisellarvensaft (Gelee royale) und/oder Drohnenlarvensaft und/oder

bis zu 10 Gew.-% dispergiertes Bienenwachs und/oder Propolisextrakt und/oder

bis zu 2 Gew.-% Propolis (Bienenkittharz) enthält, wobei der Honig insgesamt nicht mehr als 50 Gew.-% Bienenprodukt enthält, verwendet.

9. Verfahren nach einem der vorhergehenden Ansprüche, dadurch gekennzeichnet, dass man ein Endprodukte herstellt, welches bis zu 5 Gew.-%, bezogen auf das Endprodukt, an Zusatzstoffen enthält.

10. Verfahren nach Anspruch 9, dadurch gekennzeichnet, dass man als andere Zusatzstoffe Enzyme, Hormone, Vitamine, Mineralstoffe, Spurenelemente, Farbstoffe, Aromastoffe, Pflanzenextrakte und/oder ihre Gemische verwendet.

11. Verwendung des nach den Verfahren der Ansprüche 1 bis 10 erhaltenen pulverisierten Bienenprodukts als Vorprodukte für die Nahrungsmittelherstellung, als Trägerstoffe für Arzneimittel oder als Nahrungsmittel.


## Claims

1. A process for the production of powder-form honey products containing at least 50% by weight of honey, characterized in that from 15 to 25% by weight of pyrogenic or precipitated finely divided silica, based on the end product, is introduced into a mixer, the silica is moved and from 85 to 75% by weight of honey or a mixture of honey and one or more other bee products, based on the end product, is added continuously or in portions to the moving silica in such a way that a temperature of 35°C is not exceeded.

2. A process for the production of powder-form honey products containing at least 50% by weight of honey, characterized in that

from 5 to 15% by weight of pyrogenic or precipitated finely divided silica and

from 25 to 35% by weight of carbohydrates, which act as ballast or are themselves of nutrient quality, are mixed in a mixer and

from 50 to 70% by weight of honey or a mixture of honey and one or more other bee products, the percentages being based on the end product,
are added continuously or in portions to the moving mixture of silica and carbohydrates in such a way that a temperature of 35°C is not exceeded.

3. A process for the production of powder-form honey products containing at least 50% by weight of honey, characterized in that

from 5 to 15% weight of pyrogenic or precipitated finely divided silica and

from 25 to 35% by weight of carbohydrates which act as ballast or are themselves of nutrient quality and

from 50 to 70% by weight of honey or a mixture of honey and one or more other bee products, the percentages by weight being based on the end product, are mixed together by

a) preparing from the carbohydrates and the honey or the mixture of honey and one or more other bee products a mixture containing

from 45 to 35% by weight of honey or a mixture of honey and one or more other bee products and

from 55 to 45% by weight of carbohydrates, based on the mixture of honey and polymeric carbohydrates,

b) adding the silica to the mixture of carbohydrates and honey, mixing and

c) adding the remaining honey or the remaining mixture of honey and one or more bee products continuously or in portions to the moving mixture of honey, carbohydrates and silica in such a way that a temperature of 35°C is not exceeded.

4. A process as claimed in Claim 2 or 3, characterized in that alpha-cellulose and/or treated, extruded, puffed starch products are used as the carbohydrates which act as ballast or themselves have nutrient quality.

5. A process as claimed in one or more of the preceding Claims, characterized in that mixers of the type normally used as liquid mixers for the preparation of emulsions or dispersions, in which the power of the motor is increased, are used for mixing the constituents.

6. A process as claimed in one or more of the preceding Claims, characterized in that glucose-rich honey containing more than 40% by weight and preferably more than 50% by weight of glucose is used as the honey.

7. A process as claimed in any of the preceding Claims, characterized in that drone juice, queen bee juice, propolis, propolis extracts, pollen, beebread and/or mixtures thereof are used as the other bee products.

8. A process as claimed in Claim 1, 2, 3, 4, 5 or 6, characterized in that honey containing

up to 50% by weight of beebread and/or flower pollen and/or

up to 15% by weight of queen bee larvae juice (gelee royale) and/or drone larvae juice and/or

up to 10% by weight of dispersed beeswax and/or propolis extract and/or

up to 2% by weigt of propolis (bee glue),
based on the fresh weight of the honey, the honey containing in all no more than 50% by weight of bee product, is used as the mixture of honey and bee product.

9. A process as claimed in any of the preceding Claims, characterized in that an end product containing up to 5% by weight of additives, based on the end product, is prepared.

10. A process as claimed in Claim 9, characterized in that enzymes, hormones, vitamins, minerals, trace elements, dyes, flavorings, vegetable extracts and/or mixtures thereof are used as the other additives.

11. The use of the powder-form bee product obtained by the process claimed in Claims 1 to 10 as an intermediate for the production of foods, as a carrier for medicaments or as a food.


## Revendications

1. Procédé pour la préparation de produits au miel pulvérisés, contenant au moins 50% en poids de miel, caractérisé en ce qu'on introduit de 15 à 25% en poids d'acide silicique finement divisé précipité ou pyrogène, sur la base du produit final, dans un mélangeur, on agite l'acide silicique et on ajoute à l'acide silicique en mouvement de 85 à 75% en poids de miel ou d'un mélange de miel et d'un ou plusieurs autres produits des abeilles, sur la base du produit final, d'une manière continue ou par fractions, en opérant de façon telle qu'une température de 35°C ne soit pas dépassée.

2. Procédé pour la préparation de produits au miel pulverisés, contenant au moins 50% en poids de miel, caractérisé en ce qu'on mélange, dans un mélangeur, de 5 à 15% en poids d'acide silicique finement divisé précipité ou pyrogène et de 25 à 35% en poids d'hydrates de carbone qui agissent comme substances formant charges ou qui présentent eux-mêmes une qualité nutritive, et en ce qu'on ajoute au mélange en mouvement formé d'acide silicique et d'hydrates de carbone de 50 à 70% en poids de miel ou d'un mélange de miel et d'un ou plusieurs autres produits des abeilles, les pourcentages en poids étant calculés sur la base du produit final, en opérant de façon continue ou par fractions et de façon telle qu'une températue de 35°C ne soit pas dépassée.

3. Procédé pour la préparation de produits au miel pulverisés, contenant au moins 50% en poids de miel, caractérisé en ce qu'on mélange ensemble de 5 à 15% en poids d'acide silicique finement divisé précipité ou pyrogène et de 25 à 35% en poids d'hydrates de carbone qui agissent comme substances formant charges ou qui présentent eux-mêmes une qualité nutritive, et de 50 à 70% en poids de miel ou d'un mélange de miel et d'un ou plusieurs autres produits des abeilles, les pourcentages en poids étant calculés sur la base du produit final,

a) en préparant à partir des hydrates de carbone et du miel ou de mélange de miel et d'un ou plusieurs autres produits des abeilles un mélange qui renferme de 45 à 35% en poids de miel ou d'un mélange de miel et d'un ou plusieurs autres produits des abeilles et de 55 à 45% en poids d'hydrates de carbone, sur la base du mélange de miel et d'hydrates de carbone polymères,

b) en ajoutant au mélange d'hydrates de carbone et de miel l'acide silicique, en mélangeant, et

c) en ajoutant au mélange en mouvement de miel, d'hydrates de carbone et d'acide silicique le miel restant ou le mélange restant de miel et d'un ou plusieurs autres produits des abeilles, de façon continue ou par fractions, en opérant de façon telle qu'une température de 35°C ne soit pas dépassée.

4. Procédé suivant la revendication 2 ou 3, caractérisé en ce qu'on utilise, comme hydrates de carbone agissant comme substances formant charges ou présentant eux-mêmes une qualité nutritive, de l'alpha-cellulose et/ou des produits de l'amidon traités, extrudés ou tamponnés.

5. Procédé suivant l'une quelconque des revendications précédentes, caractérisé en ce qu'on utilise, pour le mélange des constituants, des appareils mélangeurs qui sont employés normalement comme mélangeurs à liquides pour la préparation d'émulsions ou de dispersions et dans lesquels la puissance du moteur est renforcée.

6. Procédé suivant l'une quelconque des revendications précédentes, caractérisé en ce qu'on utilise comme miel, du miel riche en glucose renfermant plus de 40% et de préférence plus de 50% en poids de fraction glucose.

7. Procédé suivant l'une quelconque des revendications précédentes, caractérisé en ce qu'on utilise, comme autres produits des abeilles, du suc de faux-bourdon, du suc de reine, de la propolis, des extraits de propolis, du pollen, du pain d'abeilles et/ou leurs mélanges.

8. Procédé suivant l'une quelconque des revendications 1, 2, 3, 4, 5 ou 6, caractérisé en ce qu'on utilise, comme mélange de miel et de produits des abeilles, du miel qui contient, sur la base du poids du miel frais, jusqu'à 50% en poids de pain d'abeilles et/ou de pollen de fleurs et/ou jusqu'à 15% en poids de suc de larves de reine (gelée royale) et/ou de suc de larves de faux-bourdon et/ou jusqu'à 10% en poids de cire d'abeilles en dispersion et/ou d'extrait de propolis et/ou jusqu'à 2% en poids de propolis (résine de bouchage des abeilles), le miel ne contenant pas plus de 50% en poids de produit des abeilles au total.

9. Procédé suivant l'une quelconque des revendications précédentes, caractérisé en ce qu'on prépare un produit final qui contient jusqu'à 5% en poids, sur la base de produit final, de subsances formant additifs ou adjuvants.

10. Procédé suivant la revendication 9, caractérisé en ce qu'on utilise, comme autres substances formant additifs, des enzymes, des hormones, des vitamines, des substances minérales, des oligo-éléments, des colorants, des substances aromatiques, des extraits de plantes et/ou leurs mélanges.

11. Utilisation du produit des abeilles pulvérisé obtenu par le procédé des revendications 1 à 10 à titre d'avant-produits pour la préparation de substances alimentaires, comme véhicules ou excipients pour des médicaments ou comme substances alimentaires.